# EUROPÄISCHE PATENTSCHRIFT

(11) **EP 3 769 402 B1**
(45) Veröffentlichungstag und Bekanntmachung des Hinweises auf die Patenterteilung: **11.03.2026**
(21) Anmeldenummer: 19723701.9
(22) Anmeldetag: 30.04.2019
(51) Int. Cl.: H02K 3/30, H02K 3/34, H02K 15/12

(54) **VERFAHREN ZUR HERSTELLUNG EINES ELEKTROMOTORS MIT EINEM ELEKTRISCHEN ISOLATIONSSYSTEM**
MANUFACTURING METHOD FOR AN ELECTRIC MOTOR WITH AN ELECTRICAL INSULATION SYSTEM
PROCÉDÉ DE FABRICATION D'UN MOTEUR ÉLECTRIQUE AVEC UN SYSTÈME D'ISOLATION ÉLECTRIQUE

(30) Priorität: 04.05.2018 EP 18170761
(43) Veröffentlichungstag der Anmeldung: 27.01.2021
(73) Patentinhaber: Innomotics GmbH, 90441 Nürnberg (DE)
(72) Erfinder: EDER, Florian, 91054 Erlangen (DE); HELLER, Janis, 97616 Bad Neustadt (DE); KATZENBERGER, Tobias, 97631 Bad Königshofen STT Untereßfeld (DE); PLOCHMANN, Bastian, 91413 Neustadt an der Aisch (DE)
(74) Vertreter: Michalski Hüttermann & Partner Patentanwälte mbB
(86) Internationale Anmeldenummer: PCT/EP2019/061044
(87) Internationale Veröffentlichungsnummer: WO 2019/211274

(56) Entgegenhaltungen:
- DE-A1- 3 133 811
- DE-U1- 20 009 286
- UHU: "Seite: 1/7", 16 September 2010 (2010-09-16), pages 1 - 7, XP055516378, Retrieved from the Internet <URL:http://www.i-m.de/gefahrstoffe/256460.pdf> [retrieved on 20181017]

## Beschreibung

Die Erfindung betrifft ein verbessertes Verfahren zur Herstellung eines Elektromotors mit einem elektrischen Isolationssystem, insbesondere ein hinsichtlich der Isolation der Draht-Wicklungen in den Nuten des Blechpakets gegen das Blechpaket verbessertes elektrisches Isolationssystem EIS.

Bekannt sind Blechpakete von Elektromotoren, die Nuten mit einer Draht-Wicklung, in der Regel einer Kupferdraht-Wicklung, wobei der Draht durch einen Drahtlack und die Wicklung bildendes Flächenisolationsmaterial elektrisch isoliert ist, umfassen. Dabei gibt es je nach Größe und Leistungsklassen unterschiedliche Möglichkeiten, Elektromotoren zu fertigen.

DE 31 33 811 A1 beschreibt Ein- oder Mehrschichtwicklungen bzw. Formspulen für elektrische Maschinen aus isolierten Runddrähten, denen parallel dünnere Fäden, Rovings oder Bänder aus flexiblem, nichtleitendem Material mitgewickelt werden. Diese ordnen sich in den Zwickelräumen zwischen den Drähten an, füllen die Hohlräume teilweise und erhöhen die Kapillarwirkung, sodass das nachträglich eingebrachte Tränkharz besser in der Wicklung verbleibt. Optional können die Fäden beschichtet sein, beispielsweise mit Beschleunigern, die das Tränkharz schneller gelieren lassen, um ein Auslaufen zu verhindern.

In der Größenordnung von Achshöhe 63mm bis 450 mm und entsprechend den Leistungen von 150W bis 1,6 MW wird typischerweise der so genannte Stator, also das Blechpaket mit vorgewickelten Leitern bestückt. Diese Wicklungen werden dabei in die Statornuten mechanisch eingezogen und anschließend geschaltet. Die elektrische Isolation der Einzeldrähte untereinander sowie gegenüber dem auf Erdpotential liegenden Blechpaket ist durch Flächenisolationsmaterialien, wie Wickelpapier, und dem Drahtlack der einzelnen Wicklungsdrähte gegeben. Aufgrund der geometrischen Anforderungen der Nuten wie dem Nutzahn, der zur Ausbildung möglichst geschlossener Magnetfeldlinien dient, ist eine maximale Nutfüllung von 85 Vol% mit Kupferdraht inklusive Drahtlack möglich, da sonst beispielsweise die Einziehkräfte zu groß werden würden und damit die Flächenisolation, also beispielsweise das Wickelpapier und/oder der Drahtlack beschädigt werden könnten, beispielsweise durch Kratzer, Risse und/oder durch Dehnung. Im Ergebnis bleiben mindestens 15 Vol% freies Volumen in den Nuten des Blechpakets, ein Teil davon innerhalb des Leiters und ein Teil davon zwischen dem Leiter und der Nut-Innenseite, beispielsweise in den Ecken, wo der Leiter nicht genau am Nutinnenrand anliegt. Der Teil des freien Volumens, der innerhalb des Leiters liegt, sollte optimaler weise durch Imprägnierung mit Imprägnierharz möglichst vollständig gefüllt werden.

Dazu werden in der Regel Imprägnierverfahren wie Tauchverfahren eingesetzt, bei denen ein oder mehrere Statoren langsam in ein Flüssig-Imprägnierharz-Becken getaucht werden, damit das flüssige Imprägnierharz in die Hohlräume zwischen den Einzeldrähten des Leiters und dem Blechpaket fließen und diese Hohlräume ausfüllen kann. Im Anschluss werden die so getränkten Statoren durch Temperatureinwirkung und/oder UV-Bestrahlung über einen gewissen Zeitraum gehärtet. Dadurch wird aus dem flüssigen und/oder angeliertem Imprägnierharz, das im Tauchbad die verbleibenden Hohlräume der Nuten, in dem Volumen, das innerhalb des Leiters noch hohl ist, ausfüllt, der fertige Verguss, beispielsweise in Form eines vollständig ausgehärteten Duromers als Vergussmasse. Die Qualität der Imprägnierung ist letztendlich durch einen möglichst hohen Füllgrad der Hohlräume und eine möglichst geringe Restenthalpie des Imprägnierharzes definiert. Optimal sind dabei erstens vollständig mit Imprägnierharz gefüllte Hohlräume des Leiters und zweitens eine vollständige Vernetzung des Imprägnierharzes.

Nachteilig dabei ist, dass zur Imprägnierung verschiedener Stator-Typen die Rheologie, sowie die chemische Reaktivität des Imprägnierharzes auf den jeweiligen Stator-Typ einzustellen ist, damit auch eine vollständige Füllung der Hohlräume, beispielsweise im Tauchbad, gewährleistet wird.

Je nach Stator-Typ ist eine höhere oder niedrigere Viskosität gefordert, damit durch das Imprägnierharz eine vollständige Füllung der Hohlräume und gleichzeitig eine schnelle Gelierung erfolgt, die dann das Abfließen des Imprägnierharzes bei der Herausnahme des Stators aus dem Tauchbad wieder verhindert.

Damit verschiedene Stator-Typen in einem gemeinsamen Tauchbad wirtschaftlich imprägniert werden können, wird die Rheologie, Viskosität und/oder die chemische Zusammensetzung des Tauchbads auf einen Mittelwert eingestellt ohne eine Optimierung hinsichtlich eines Stator-Typs.

Aufgabe der vorliegenden Erfindung ist es daher, eine Möglichkeit zu schaffen, die eine zielgerichtete Füllung des Leiters, insbesondere der Drahtwicklung eines Stators mit Imprägnierharz, ohne chemische Veränderung des Imprägnierharzes, im Tauchbad hinsichtlich Rheologie, Viskosität und/oder Gelierzeiten, ermöglicht.

Diese Aufgabe wird durch den Gegenstand der vorliegenden Erfindung, wie er in der Beschreibung und den Ansprüchen offenbart wird, gelöst.

Dementsprechend ist Gegenstand der Erfindung ein Verfahren zur Herstellung eines Elektromotors mit einem elektrischen Isolationssystem aufweisend ein Blechpaket mit Nuten und in diesen Nuten elektrisch Flächenisolierte Draht-Wicklungen mit einzelnen Drähten in einer Vergussmasse, wobei zwischen den Drähten der Draht-Wicklung und/oder um die einzelnen Drähte herum, aber innerhalb der durch Flächenisolationsmaterial begrenzten Draht-Wicklung saugfähiges Material ist, das zur Aufnahme von flüssigem Imprägnierharz, das nach erfolgter Härtung und Fertigstellung des elektrischen Isolationssystems die Vergussmasse bildet, geeignet ist, folgende Verfahrensschritte umfassend:
- Wicklung eines Leiters aus Wickel-Draht, der mit Drahtlack umgeben ist, wobei im fertig gewickelten Leiter saugfähiges Material enthalten ist,
- Einbringen des so gefertigten Leiters in die Nuten eines Blechpakets,
- Eintauchen des gewickelten Blechpakets in ein Imprägnierharz
- Aushärten des imprägnierten Blechpakets,wobei als saugfähiges Material zumindest auch Fasern eingesetzt werden, bei dem zwischen dem Einziehen des Leiters in die Nuten des Blechpakets und dem Eintauchen des Blechpakets in das Imprägnierharz ein Zwischenschritt zur Erwärmung des Blechpakets zwischengeschaltet wird, bei dem im Leiter Fasern mit oberflächlicher Klebstoff-Beschichtung eingesetzt werden, wobei der Klebstoff zumindest zum Teil so gewählt ist, dass er sich während des Zwischenschritts der Erwärmung zersetzt und/oder verdampft.

Allgemeine Erkenntnis der Erfindung ist es, dass durch Einbringen von saugfähigem Material, beispielsweise in Form eines Schaums, in Form von Fasern und/oder Faserteilen, wie polymeren Fasern, zwischen die Drähte und/oder um die Drähte eines gewickelten Leiters herum, dieses bei Kontakt mit flüssigem Imprägnierharz wie ein Schwamm wirkt und unter Umständen sogar unter Volumenvergrößerung flüssiges Imprägnierharz aufnimmt und/oder in Position hält, also beispielsweise innerhalb der Draht-Wicklung mit oder ohne Gelierung, hält. Dadurch wird - bezogen auf das Imprägnierharz beispielsweise im Tauchbad - die Füllung der Hohlräume der Draht-Wicklung in einem weiten Viskositätsbereich gleich gut gewährleistet. Die Einstellung spezifischer Geliereigenschaften des Imprägnierharzes - beispielsweise im Tauchbad - wird dadurch überflüssig, da das flüssige und nicht gelierte Imprägnierharz durch die Kapillarkräfte des saugfähigen Materials auch ohne frühzeitige oberflächliche Gelierung in Position gehalten wird.

Der Erfindung liegt das saugfähige Material in Form von Fasern vor. Dabei können die Fasern Langfasern und/oder Endlos-fasern sein. Die Fasern können dann, genau wie die Leitungsdrähte, gewickelt werden und mit den Leitungsdrähten einen gewickelten Leiter bilden.

Als "Leiter" wird vorliegend eine Wicklung von Drähten bezeichnet, die zusammen in Flächenisolationsmaterial, wie beispielsweise Papier, gewickelt werden und ein Bündel von Wickel-Drähten bilden, das in eine Nut eines Blechpakets eingezogen wird. Schneidet man einen Leiter im Querschnitt auf, so erkennt man im besten Fall Kreise, die die Durchmesser der Drähte zeigen, die eine "dichteste" Packung im Leiter, analog zur dichtesten Kugelpackung im Kristall, bilden. Analog zur Raumerfüllung der dichtesten Kugelpackung, die 74% beträgt, wird vorliegend davon ausgegangen, dass die restlichen 26 Vol% an Hohlraum im Leiter mit saugfähigem Material befüllbar sind. Es wird gemäß der Erfindung angestrebt, möglichst viel von diesem Hohlraum, der sowieso aus Dimensionsgründen von den Drähten nicht genutzt werden kann, mit saugfähigem Material zu befüllen.

Dabei ist es insbesondere auch vorteilhaft, wenn die Fasern gleichzeitig mit der Bündelung der Wickel-Drähte, insbesondere der Kupferdrähte mit gewickelt werden und so zwischen den Kupferdrähten im Leiter mit diesen in der Wicklung und im fertigen Elektromotor vorliegen.

Nach einer bevorzugten Ausführungsform der Erfindung wird dabei die Anzahl der Faserwindungen im Verhältnis zu den Kupferdrahtwindungen so gewählt, dass kein Platz in der Nut und/oder im Leiter, der mit Kupferdraht befüllbar wäre, dadurch eingenommen wird.

Die Anzahl der Faserwindungen wird entsprechend im Spannungsfeld zwischen hoch genug, dass eine möglichst vollständige Durchtränkung des Statorpakets nach der Härtung vorliegt und so gering wie möglich, damit der Volumenfüllgrad in der Draht-Wicklung mit Leitungsmaterial, insbesondere mit leitfähigem Wicklungs-Draht, bevorzugt mit Kupferdraht, nicht darunter leidet, ausgewählt.

Im Wickelprozess legen sich die Fasern vornehmlich in die Hohlräume zwischen den Drähten und verringern somit nicht oder nur unwesentlich den Volumenfüllgrad. Durch die Zugkräfte beim Wickelprozess wird die einzelne Faser zusätzlich verstreckt und verringert somit ihren Durchmesser.

Beispielsweise liegen Lang- und/oder Endlos-Fasern im Leiter im Verhältnis von eine Faser pro 10 Drähten vor. Insbesondere liegt das Verhältnis Faser zu Draht im Leiter im Bereich von 1 zu 10, wie oben beschrieben, bis zum Bereich 2 zu 1 also mehr Fasern als Drähte im Leiter. Die jeweiligen Anteile richten sich beispielsweise nach der Saugfähigkeit der Faser, dem Durchmesser der Faser etc.

Nach einer weiteren Ausführungsform der Erfindung sind die Fasern zusätzlich zur Bündelung oder alternativ dazu um die Wickeldrähte gelegt, gezogen und/oder gesponnen.

Nach einer weiteren Ausführungsform der Erfindung werden die Fasern zusätzlich zur Wicklung oder alternativ dazu in den Wickeldraht durch Einsprühen und/oder anderes Einführen in Form beispielsweise eines Schaums und/oder kurzer und/oder ultra-kurzer Fasern eingebracht.

In der Erfindung sind die Fasern selbst oberflächenbehandelt. Beispielsweise dient die Oberflächenbehandlung dazu, dass die Fasern sich leichter mit den Wickel-Drähten, die oberflächlich einen Drahtlack haben, wickeln lassen. Die Oberflächenbehandlung der Fasern dient bevorzugt dazu, dass die Fasern auf dem Drahtlack der Isolierung der Wickeldrähte besser gleiten. Damit lassen sich die Fasern besser und leichter zusammen mit den Wickel-Drähten wickeln.

Die Wickel-Drähte sind oberflächlich mit einem Klebstoff behandelt, so dass eine leichte Haftung der Faser am Drahtlack bewirkt wird, wodurch die Fasern besser im Wickelbund haften bis die Wicklung, also das Draht-Faser-Bündel durch den Einlege-Prozess in der Nut befestigt beziehungsweise abgelegt ist.

Beispielsweise wird der Klebstoff ausgewählt aus Klebstoffen der folgenden Gruppe: Sprühkleber, Uhu, Tesa, 3M, sowie beliebige Klebstoff-Mischungen der vorgenannten und/oder ergänzenden Klebstoff-Sorten.

Bei der Wahl eines geeigneten Klebstoffes kommen insbesondere Fragestellungen, wie die Kompatibilität mit dem Imprägnierharz, die Vollständigkeit der Vernetzung des Klebers, die Klebewirkung und/oder ob die verklebte Faser repositionierbar und/oder wiederlösbar angebracht ist. Die chemische Basis der in Frage kommenden Klebstoffe erstreckt sich insbesondere auch hin zu Acrylklebstoffen.

Der Klebstoffanteil wird gerade so hoch gewählt, dass das Garn während der Wicklung, also dem Wickelprozess, im Wicklungsverbund verbleibt und sich nicht separiert. Somit liegt ein Großteil der Einzelfasern frei und bildet eine sehr große Oberfläche im sonst leeren Zwischenraum der Wicklungsdrähte, insbesondere der Kupferdrähte.

Nach einer vorteilhaften Ausführungsform der Erfindung wird die Faser beispielsweise durch den Klebstoff vorerst kompaktiert, so dass das effektive Volumen der Faser während der Wicklung geringer ist. Dabei ist es insbesondere vorteilhaft, wenn ein Kleber gewählt wird, der sich dann während der Vorheizphase des Stators - insbesondere vorteilhafterweise noch vor der eigentlichen Imprägnierung des Stators, wieder - zumindest teilweise wieder entfernbar ist, also sich verflüchtigt, verdampft und/oder in gasförmige Produkte zersetzt.

Die dann wieder Klebstoff-freie Faser kann dann wieder Auffächern und/oder Aufquellen und zeigt dann quasi ein Optimum an Saugfähigkeit und Kapillarkräften zur Aufnahme von Imprägnierharz.

Das flüssige Imprägnierharz, das - beispielsweise über das Eintauchen des Stators in ein Tauchbad - an die Faser und die Draht-Wicklung kommt, wird somit über die Kapillarkräfte der Faser und/oder durch ein Aufquellen der Faser in die Zwischenräume zwischen den Drähten der Draht-Wicklung gezogen und dort gehalten.

Dadurch ist nicht mehr eine umfangreiche Thixotropierung notwendig und es kann die chemische Basis dahingehend vereinfacht werden, dass kein exakter Gelierprozess zur mechanischen Fixierung des flüssigen Imprägnierharzes im Leiter mehr notwendig ist. Die Viskosität kann insgesamt geringer gewählt werden, da ein Zurücklaufen des Imprägnierharzes durch die Kapillarkräfte der zwischen den Draht-Wicklungen liegenden Fasern zumindest zum Teil unterbunden wird.

Auch das Abfließen des Imprägnierharzes an den Außenseiten wird dadurch auch beschleunigt und verbessert, weil die Gelierungs-Eigenschaften des Imprägnierharzes nicht mehr so kritisch im höchstmöglichen Bereich eingestellt sind. Das bedeutet dass das Imprägnierharz nicht mehr so schnell angeliert und deshalb besser abfließen kann.

Bei der Imprägnierung des Wickelkopfes können sich zusätzliche Vorteile ergeben, da die vorhandenen Räume zwischen den Drahtzwickeln aufgrund der Fasern sich definiert mit Harz füllen. Insbesondere beim Betrieb am Umrichter ist durch das zusätzlich mittels der Faser eingebrachte Imprägnierharz und den daraus gebildeten zusätzlichen Verguss eine höhere Lebensdauer bei hohen Spannungsspitzen, ausgelöst durch den Umrichter, gegeben.

Eine nahezu vollständige Imprägnierung einer Draht-Faser-Wicklung, wie einer Statorwicklung, nach der vorliegenden Erfindung, also das Befüllen von Lufteinschlüssen mit Imprägnierharz, ermöglicht eine deutlich bessere Wärmeabfuhr in der Wicklung.

Durch die Erfindung werden mit kostengünstigen Materialien und kleinen Veränderungen in der Fertigungsweise wie der Zusatzfaser im herkömmlichen Wickelprozess, die nicht imprägnierten Statoren derart konditioniert, dass sie effizienter und kostengünstiger imprägniert werden können. Hierbei liegt der große Vorteil insbesondere in der dann zur Verfügung stehenden Fertigungsvarianz einer einzigen Imprägnierlage.

Durch das Einbringen der Fasern in die Hohlräume der Wicklung entstehen Kapillareffekte, welche das flüssige Imprägnierharz bevorzugt in den Zwischenräumen der Drähte halten. Hierbei kann das Einbringen der Fasern ohne weiteres in den vorangehenden Wickelprozess integriert werden, ohne diesen nennenswert zu verändern.

Der Imprägnierprozess kann zeitlich optimiert werden, da die Prozessdauer hauptsächlich von der Gelierdauer abhing, die nun wegen der oben genannten Kapillareffekte nicht mehr komplett abgewartet werden muss.

Das Imprägnierharz kann kostengünstiger bezogen werden, da die technischen Anforderungen wie Gelierzeit, Thixotropierung und/oder exakt definierter Reaktionsverlauf wesentlich geringer sind.

Die Fertigungsvarianz steigt, da die oben genannten Punkte nicht mehr ausschlaggebend sind und somit Statoren verschiedener Achshöhen in derselben Anlage/dem gleichen Prozess gefahren werden können.

Dadurch, dass weniger vorreagiertes und gegebenenfalls verunreinigtes Harz aus dem Stator zurück in das Harzbecken tropft, ist weniger Reinigungs- und/oder Regulationsaufwand notwendig. Zudem kann der Ausschuss reduziert werden.

Durch die Erfindung wird erstmals eine Möglichkeit gezeigt, wie kostengünstig eine möglichst vollständige Imprägnierung einer Draht-Wicklung eines Elektromotors durch Einbringen von Fasern realisiert werden kann.

## Patentansprüche

1. Verfahren zur Herstellung eines Elektromotors mit einem elektrischen Isolationssystem aufweisend ein Blechpaket mit Nuten und in diesen Nuten elektrisch Flächenisolierte Draht-Wicklungen mit einzelnen Drähten in einer Vergussmasse, wobei zwischen den Drähten der Draht-Wicklung und/oder um die einzelnen Drähte herum, aber innerhalb der durch Flächenisolationsmaterial begrenzten Draht-Wicklung saugfähiges Material ist, das zur Aufnahme von flüssigem Imprägnierharz, das nach erfolgter Härtung und Fertigstellung des elektrischen Isolationssystems die Vergussmasse bildet, geeignet ist, folgende Verfahrensschritte umfassend:
- Wicklung eines Leiters aus Wickel-Draht, der mit Drahtlack umgeben ist, wobei im fertig gewickelten Leiter saugfähiges Material enthalten ist,
- Einbringen des so gefertigten Leiters in die Nuten eines Blechpakets,
- Eintauchen des gewickelten Blechpakets in ein Imprägnierharz
- Aushärten des imprägnierten Blechpakets,wobei als saugfähiges Material zumindest auch Fasern eingesetzt werden, bei dem zwischen dem Einziehen des Leiters in die Nuten des Blechpakets und dem Eintauchen des Blechpakets in das Imprägnierharz ein Zwischenschritt zur Erwärmung des Blechpakets zwischengeschaltet wird, bei dem im Leiter Fasern mit oberflächlicher Klebstoff-Beschichtung eingesetzt werden, wobei der Klebstoff zumindest zum Teil so gewählt ist, dass er sich während des Zwischenschritts der Erwärmung zersetzt und/oder verdampft.

2. Verfahren nach Anspruch 1, bei dem das saugfähige Material zumindest zum Teil einen Schaum umfasst.

3. Verfahren nach einem der vorstehenden Ansprüche, bei dem das saugfähige Material zumindest zum Teil Endlos-Fasern umfasst.

4. Verfahren nach einem der vorstehenden Ansprüche, bei dem das saugfähige Material zumindest zum Teil lange Fasern umfasst.

5. Verfahren nach einem der vorhergehenden Ansprüche, bei dem saugfähiges Material in Form von Fasern gleichzeitig mit den Wickel-Drähten zu Leiter gewickelt wird.

6. Verfahren nach einem der vorhergehenden Ansprüche, bei dem der Anteil an saugfähigem Material im Leiter im Bereich von bis zu 26 Vol % des Gesamtvolumens im Leiter beträgt.

## Claims

1. Method for producing an electric motor having an electrical insulation system comprising a laminated core having slots and wire windings, electrically surface insulated in these slots, with individual wires in a potting compound, wherein there is absorbent material between the wires of the wire winding and/or around the individual wires but within the wire winding bounded by surface insulation material, said absorbent material being suitable for taking up liquid impregnation resin that forms the potting compound after it has cured and the electrical insulation system has been completed, said method comprising the following method steps:
- winding a conductor from winding wire that is surrounded by wire enamel, wherein absorbent material is contained in the fully wound conductor,
- introducing the conductor produced in this way into the slots of a laminated core,
- dipping the wound laminated core in an impregnation resin,
- curing the impregnated laminated core, wherein at least also fibres are used as absorbent material, wherein between the pulling of the conductor into the slots of the laminated core and the dipping of the laminated core in the impregnating resin, there is interposed an intermediate step of heating the laminated core, wherein fibres having a surface adhesive coating are used in the conductor, wherein the adhesive is at least partially selected such that it breaks down and/or evaporates during the intermediate step of heating.

2. Method according to Claim 1, wherein the absorbent material at least partially comprises a foam.

3. Method according to either of the preceding claims, wherein the absorbent material at least partially comprises endless fibres.

4. Method according to one of the preceding claims, wherein the absorbent material at least partially comprises long fibres.

5. Method according to one of the preceding claims, wherein absorbent material in the form of fibres is wound simultaneously with the winding wires to form a conductor.

6. Method according to one of the preceding claims, wherein the proportion of absorbent material in the conductor is in the range of up to 26% by volume of the total volume in the conductor.

## Revendications

1. Procédé de fabrication d'un moteur électrique avec un système d'isolation électrique, comportant un système d'isolation électrique présentant un paquet de tôles ayant des encoches et, dans ces encoches, des enroulements de fils à isolation électrique de surface avec des fils individuels dans une masse d'enrobage, dans lequel, entre les fils de l'enroulement de fil et/ou autour des fils individuels, mais à l'intérieur de l'enroulement de fil délimité par un matériau d'isolation de surface, se trouve un matériau absorbant apte à recevoir une résine d'imprégnation liquide laquelle, après durcissement et achèvement du système d'isolation électrique, forme la masse d'enrobage, comprenant les étapes suivantes :
- enroulement d'un conducteur constitué d'un fil d'enroulement, qui est entouré d'un vernis de fil, un matériau absorbant étant contenu dans le conducteur à l'état fini de l'enroulement,
- insertion du conducteur ainsi fabriqué dans les encoches d'un paquet de tôles,
- immersion du paquet de tôles enroulé dans une résine d'imprégnation,
- durcissement du paquet de tôles imprégné, des fibres étant au moins également utilisées en tant que matériau absorbant, durcissement lors duquel une étape intermédiaire de chauffage du paquet de tôles est intercalée entre l'insertion du conducteur dans les encoches du paquet de tôles et l'immersion du paquet de tôles dans la résine d'imprégnation, et lors duquel des fibres présentant un revêtement adhésif superficiel sont utilisées dans le conducteur, l'adhésif étant au moins en partie sélectionné de telle sorte qu'il se décompose et/ou s'évapore pendant l'étape intermédiaire de chauffage.

2. Procédé selon la revendication 1, dans lequel le matériau absorbant comprend au moins en partie une mousse.

3. Procédé selon l'une quelconque des revendications précédentes, dans lequel le matériau absorbant comprend au moins en partie des fibres continues.

4. Procédé selon l'une quelconque des revendications précédentes, dans lequel le matériau absorbant comprend au moins en partie des fibres longues.

5. Procédé selon l'une quelconque des revendications précédentes, dans lequel un matériau absorbant sous forme de fibres est enroulé simultanément avec les fils d'enroulement pour former un conducteur.

6. Procédé selon l'une quelconque des revendications précédentes, dans lequel la proportion de matériau absorbant dans le conducteur se situe dans une plage allant jusqu'à 26 % en volume du volume total dans le conducteur.
